# EUROPÄISCHE PATENTSCHRIFT

(11) **EP 0 666 521 B1**
(45) Veröffentlichungstag und Bekanntmachung des Hinweises auf die Patenterteilung: **27.10.1999**
(21) Anmeldenummer: 95101395.2
(22) Anmeldetag: 02.02.1995
(51) Int. Cl.: G05D 23/02

(54) **Thermostatventil mit Voreinstellung der Durchflussmenge**
Thermostatic valve with presetting of the flow
Robinet thermostatique avec préréglage du débit

(30) Priorität: 07.02.1994 DE 9404344 U
(43) Veröffentlichungstag der Anmeldung: 09.08.1995
(73) Patentinhaber: Gampper GmbH, D-67821 Alsenz (DE)
(72) Erfinder: Gampper, Otto, D-67821 Alsenz (DE)
(74) Vertreter: Patentanwälte Möll und Bitterich

(56) Entgegenhaltungen:
- DE-A- 3 604 031
- DE-U- 8 716 877
- DE-U- 8 911 899
- DE-U- 9 308 105

## Beschreibung

Die Erfindung betrifft Thermostatventile mit Voreinstellung der Durchflussmenge, wie sie in Warmwasserheizungen verwendet werden, gemäß dem Oberbegriff des Anspruchs 1.

Zwecks Anpassung der Heizkörper an die Temperaturdaten der Heizungsanlage sind die Ventile, insbesondere auch die Thermostatventile, mit einer sogenannten Voreinstellung ausgerüstet. Diese Voreinstellung wird bei der Installation der Heizkörper fest eingestellt. Sie begrenzt den maximalen Heizungswasserdurchfluss.

Aus der DE 89 11 899 U1 ist ein Thermostatventil bekannt, dessen Gehäuse aus drei Teilen besteht. Im Einbaustutzen dieses Gehäuses ist mit Hilfe eines eingeschraubten Sitzträgers der Schaftträger der Voreinstellungshülse höhenverstellbar und verdrehsicher gelagert. Die Höhenverstellung erfolgt mit Hilfe einer besonderen Gewindebuchse, die auf den Schaftträger aufgeschraubt und im Sitzträger drehbar gelagert ist. Die Voreinstellungshülse ist zweiteilig und besteht aus dem Schaftträger und einer von oben eingeschraubten Buchse. Irgendwelche Markierungen, die es erlauben würden, den eingestellten Wert der Voreinstellung von außen abzulesen, sind nicht vorgesehen.

Aus der DE 37 43 707 A1 ist eine Voreinstellung bekannt, deren Hülse aus zwei Teilen besteht. Um die Voreinstellung justieren zu können, muss zunächst die Spindeldichtung abgeschraubt werden. Das Maß der eingestellten Voreinstellung ist nur unter Verwendung eines speziellen Ablesegerätes ablesbar.

Auch die DE 26 15 895 A1 zeigt eine Voreinstellung, deren Hülse aus zwei Teilen besteht, wobei ein Teil beweglich und das andere Teil im Ventilgehäuse fest eingebaut ist. Zur Veränderung der Voreinstellung und zur nachträglichen Kontrolle derselben muss die Spindeldichtung abgeschraubt werden.

Aus der DE 38 38 205 A1 ist eine Ventilkonstruktion bekannt, die eine dreiteilige Voreinstellungshülse verwendet. Im Gegensatz zu den zuvor beschriebenen Lösungen ist hier der Grad der Voreinstellung jedoch dank einer angebrachten Skala jederzeit von außen sichtbar, und zwar auch für Unbefugte. Allerdings besitzt diese Konstruktion einen sehr langen und aufwendigen Ventilkopf.

Die DE 93 08 105 U1 zeigt eine Konstruktion, bei der die Voreinstellungshülse zweiteilig ausgebildet ist. Das eingestellte Voreinstellungsmaß ist von außen jederzeit ablesbar.

Auch die DE 85 00 560 U1 zeigt eine zweiteilige Voreinstellungshülse. Diese besitzt an ihrem inneren Ende einen konischen Abschnitt, der mit einer Stufe in den sich anschließenden zylindrischen Abschnitt übergeht. Diese Stufe liegt in der tiefsten Stellung der Voreinstellungshülse auf dem äußeren Rand einer erweiterten Durchlassöffnung auf, so dass bei abgesenkter Voreinstellungshülse das Ventil immer verschlossen ist.

Es versteht sich, dass es die Arbeit des Heizungsmonteurs und des Kontrolleurs erheblich erleichtert, wenn das Maß der Voreinstellung an einer Skala von außen bequem abzulesen ist. Erfahrungsgemäß veranlasst eine solche Skala jedoch manchen Heizungsbenutzer, einen höheren Skalenwert einzustellen in der (berechtigten) Erwartung, mehr Wärme zu bekommen. Wird dies bei einer größeren Anzahl von Heizkörpern durchgeführt, gerät jedoch die Heizungsanlage aus dem Gleichgewicht.

Es versteht sich des weiteren, dass Herstellung und Montage des Ventils um so aufwendiger und kostspieliger sind, je mehr Einzelteile verwendet werden.

Schließlich ist bei allen Ventilkonstruktionen für Heizungsanlagen darauf zu achten, dass eine unbefugte Demontage, bei der Heizungswasser austreten könnte, erschwert oder gar unmöglich gemacht wird.

Der vorliegenden Erfindung liegt daher die Aufgabe zugrunde, ein Thermostatventil der eingangs genannten Art anzugeben, welches möglichst einfach und preisgünstig ist, dessen Voreinstellung ohne Demontage irgendwelcher Teile eingestellt werden kann, das die Kontrolle des eingestellten Maßes der Voreinstellung auf einen Blick ermöglicht und trotzdem im Rahmen des technisch und psychologisch Machbaren unbefugte Manipulationen ausschließt.

Diese Aufgabe wird gelöst durch ein Thermostatventil mit den Merkmalen des Anspruchs 1.

Die wesentlichen Vorteile der vorliegenden Erfindung gemäß Anspruch 1 beruhen auf der besonderen Ausgestaltung der Voreinstellungshülse und auf dem Gewinde in Voreinstellungshülse und Ventilgehäuse. Die Hülse selbst ist einteilig, was Herstellung und Montage erleichtert, und ist sowohl gegen die Ventilspindel innen als auch gegen das Ventilgehäuse außen jeweils mittels eines O-Rings abgedichtet. Das Gewinde ist ein Sondergewinde, dessen Steigung mit dem Voreinstellungshub korrespondiert. Ferner sind die Gewindewendeln dieses Sondergewindes in der Hülse und im Ventilgehäuse jeweils wiederholgenau in einer exakten Höhen- und Winkelposition geschnitten, so dass beliebige Hülsen in beliebigen Ventilgehäusen immer dieselbe exakte Winkelposition einhalten. Die Kombination der beiden zuletzt genannten Maßnahmen ist dafür verantwortlich, dass man mit einem Blick auf das obere Ende der Hülse das eingestellte Maß der Voreinstellung erkennen kann. Sie ist auch dafür verantwortlich, dass auch nach einem Austausch der O-Ringe oder des gesamten Ventileinsatzes die Voreinstellung eindeutig ablesbar bleibt.

Die Anschlagmutter begrenzt den Hub der Hülse auf einen Wert kleiner als die Gewindesteigung, vorzugsweise auf 7/8 derselben.

Die Marke an der Hülse und die Markierung am Ventilgehäuse fluchten bei ganz herausgedrehter Hülse. Da es sich nicht um Skalen, sondem nur um einfache Markierungen handelt, deren Bedeutung dem Laien nicht bekannt ist, besteht kein Anreiz zur unbefugten Manipulation. Der Fachmann jedoch kann die Voreinstellung wie an einer Uhr auf einen Blick ablesen.

Gemäß einer vorteilhaften Ausgestaltung der Erfindung besitzt der innere Rand der Hülse eine innere Konusfläche und ist an wenigstens einer Stelle außen konisch abgeflacht, und zwar so weit, dass in der unteren Ringfläche der Hülse wenigstens ein Öffnungsspalt entsteht. Dieser definiert bei ganz eingedrehter Hülse den minimalen Durchfluss.

Die wesentlichen Vorteile der vorliegenden Erfindung gemäß Anspruch 5 beruhen auf dem in die Wand der Vertiefung, in die das innere Ende der Voreinstellungshülse eintaucht, eingearbeiteten etwa keilförmigen Fenster. Der die eingestellte Durchflussmenge definierende Querschnitt wird nicht mehr wie beim Stand der Technik durch den Spalt zwischen dem Boden der Vertiefung und dem unteren Ende der Voreinstellungshülse definiert, sondem durch den vom unteren Ende der Voreinstellungshülse freigegebenen Querschnitt des Fensters. Da dieses Fenster keilförmig ist, lässt sich jede gewünschte Abhängigkeit zwischen Voreinstellungshub und Durchflussmenge erzielen.

Als besonders vorteilhaft hat sich herausgestellt, wenn das Fenster dadurch gebildet wird, dass aus der kreiszylindrischen Vertiefung eine etwa viertelkreisförmige Ausfräsung vorgenommen wird, wobei die Achsen von Vertiefung und Ausfräsung senkrecht zueinander gerichtet sind.

Die den Voreinstellungshub begrenzende Anschlagmutter besitzt vorteilhafterweise eine Innenöffnung, die so gewählt ist, daß das obere Ende der Hülse, die vorteilhafterweise als Mehrkant, beispielsweise Sechskant, ausgebildet ist, sichtbar und für den Voreinstellungsschlüssel zugänglich bleibt

Anhand der Zeichnung soll die Erfindung in Form zweier Ausführungsbeispiele näher erläutert werden. Es zeigen
- Fig. 1: einen Längsschnitt durch ein Thermostat-Eckventil,
- Fig. 2: eine Draufsicht auf das Ventil der Fig. 1,
- Fig. 3: einen vergrößerten Ausschnitt aus Fig. 1 (rechte Hälfte),
- Fig. 4: eine ungeschnittene Ansicht des in Fig. 3 dargestellten Teils, gedreht um 90 Grad,
- Fig. 5: einen Längsschnitt durch eine Ventilgarnitur zum direkten Einbau in Heizkörper,
- Fig. 6: eine um 90 Grad gedrehte, ungeschnittene Ansicht der Ventilgarnitur der Fig. 5 und,
- Fig. 7: eine Draufsicht auf die Ventilgarnitur der Fig. 1.

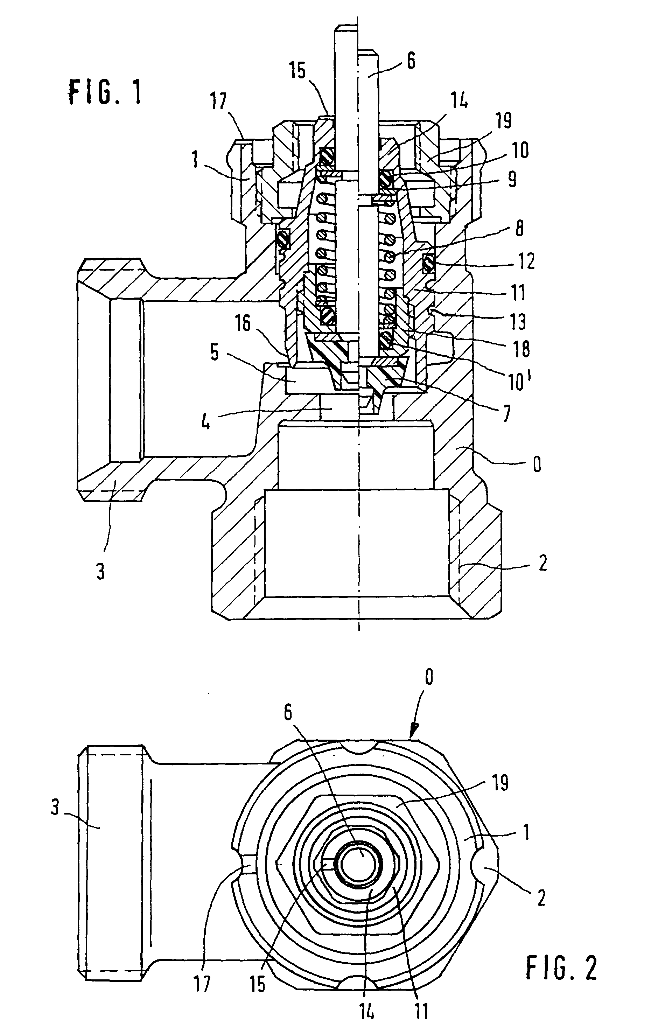

In den Fig. 1 und 2 erkennt man ein als Eckventil ausgebildetes Ventilgehäuse 0 mit einem Spindelstutzen 1, einem Einlaufstutzen 2 und einem heizkörperseitigen Auslaufstutzen 3. Im Inneren erkennt man eine Durchflußöffnung 4 und eine dazu konzentrische Vertiefung 5. Diese hat eine definierte Höhe, so daß zum Auslaufstutzen 3 hin ein Fenster verbleibt.

Von oben ist in den Ventilstutzen 1 ein kompletter Ventileinsatz eingeschraubt. Dieser besteht aus einer zentralen Ventilspindel 6, die von einer Feder 8, die auf eine Scheibe 9 drückt, in Offenstellung gehalten wird. Eine Profildichtung 7 am unteren Ende der Spindel 6 verschließt die Durchflußöffnung 4 mehr oder weniger.

Konzentrisch zu Spindel 6 und Feder 8 erkennt man eine Voreinstellungshülse 11. Diese besteht aus einem einzigen Stück, ist mittels eines Gewindes 13 direkt im Ventilstutzen 1 höhenverstellbar gelagert und mittels O-Ringen 10, 10', 12 sowohl gegen die Ventilspindel 6 als auch gegen das Ventilgehäuse 0 abgedichtet.

In die Hülse 11 ist von unten eine die Feder 8 haltende Stützhülse 18 eingeschraubt und eingedichtet. Dadurch entfällt die Notwendigkeit, die Feder 8 im Bereich der Durchlaßöffnung 4 direkt am Ventilgehäuse 0 abzustützen, so daß die Feder 8 nicht dem Heizungsmedium ausgesetzt ist.

Das obere Ende 14 der Hülse 11 ist als Mehrkant, hier Sechskant, ausgebildet, so daß die Hülse 11 mittels eines entsprechenden Steckschlüssels verdreht werden kann. Eine Anschlagmutter 19 begrenzt den Voreinstellungshub der Hülse 11 und verhindert ein versehentliches Herausdrehen des Ventileinsatzes.

Wie insbesondere Fig. 2 erkennen läßt, trägt das obere Ende 14 der Hülse 11 eine Marke 15. Der Ventilstutzen 1 trägt eine Markierung 17. Marke 15 und Markierung 17 fluchten, wenn die Voreinstellungshülse 11 ganz herausgedreht ist.

Hierzu müssen die Gewindewendeln des Gewindes 13 in Hülse 11 und Ventilgehäuse 0 sowohl axial als auch radial wiederholgenau und konstant geschnitten werden, bezogen auf die Hubendlagen der Hülse 11 und auf die Position der Marke 17. Des weiteren muß die Gewindesteigung mit der Höhe der Vertiefung 5 korrespondieren, so daß mit einer einzigen Umdrehung der Hülse 11 der gesamte Voreinstellungshub überstrichen wird. Vorzugsweise ist der Hub der Hülse 11 durch die Anschlagmutter begrenzt, so daß die Hülse nur eine 7/8-Umdrehung ausführt.

Wird die Voreinstellungshülse 11 verdreht, um die maximale Durchflußmenge an Heizungsmedium zu vergrößern, dreht sich die Marke 15 wie ein Uhrzeiger mit. Da sie durch die Öffnung in der Anschlagmutter 19 jederzeit sichtbar ist, kann ein Fachmann auf einen Blick das Maß der Voreinstellung wie auf einer Uhr ablesen, während ein Laie, dem sich die Bedeutung von Marke 15 und Markierung 17 nicht erschließt, nichts erkennen kann.

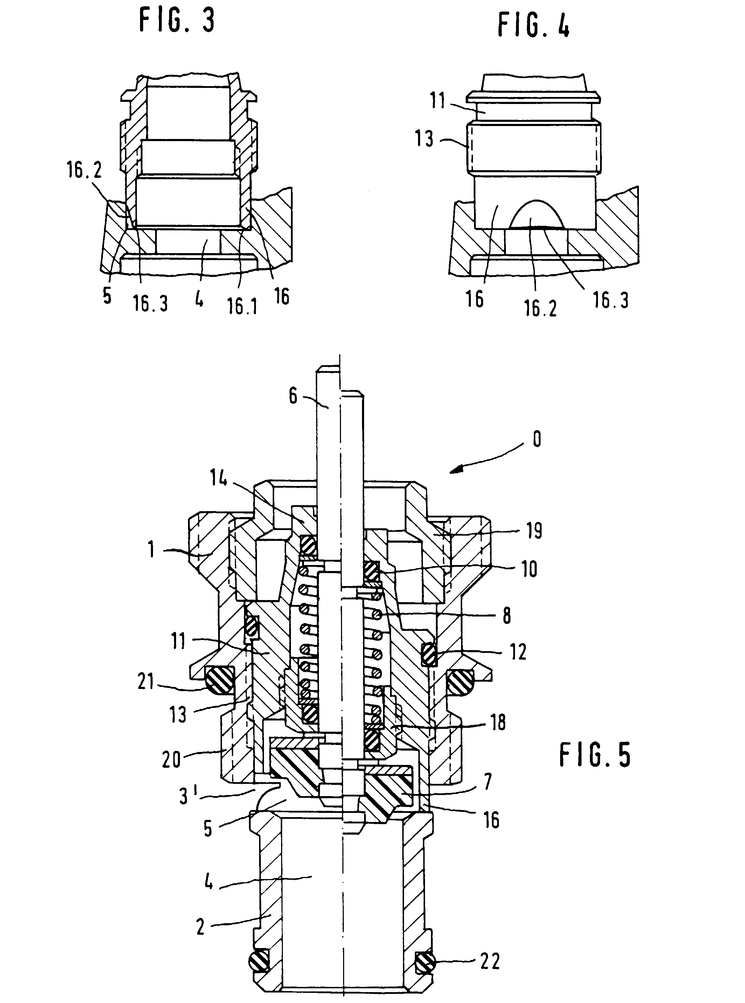

Fig. 3 zeigt einen Ausschnitt aus Fig. 1, rechte Hälfte, im Bereich des inneren Endes 16 der Voreinstellungshülse 11. Man erkennt eine innere Konusfläche 16.1. Ferner erkennt man, daß die Hülse 11 an wenigstens einer Stelle 16.2 außen konisch abgeflacht ist, wobei die Abflachung 16.2 die innere Konusfläche 16.1 schneidet. Dadurch entsteht in der unteren Ringfläche der Hülse 11 ein Öffnungsspalt 16.3, der den minimalen Durchfluß definiert.

Der Öffnungsspalt 16.3 ist besonders gut in Fig. 4 zu erkennen, die die Voreinstellungshülse 11 ungeschnitten und um 90 Grad gegenüber der Fig. 3 gedreht darstellt. Die Abflachung 16.2 und die innere Konusfläche 16.1 schneiden sich entlang einer Kegelschnittkurve, hier einer Hyperbel, so daß der Öffnungsspalt 16.3 oben von einer Hyperbel, unten von einer Geraden begrenzt wird.

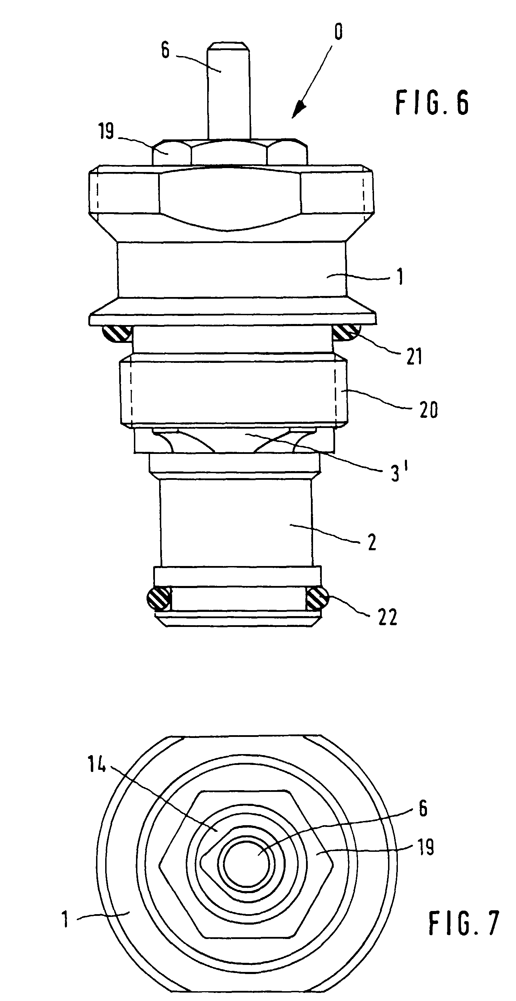

Die Fig. 5 bis 7 zeigen als zweites Ausführungsbeispiel eine Ventilgarnitur zum integrierten Einbau in Ventilheizkörper. Man erkennt Ventilgehäuse 0, Spindelstutzen 1, Einlauf 2 und Durchflußöffnung 4 sowie die dazu konzentrische Vertiefung 5. Im Ventilstutzen 1 befindet sich der komplette Ventileinsatz, bestehend aus Ventilspindel 6, Feder 8, Profildichtung 7, Stützhülse 18 und einstückiger Voreinstellungshülse 11, die mittels Gewinde 13 direkt im Ventilstutzen 1 höhenverstellbar gelagert und mittels O-Ringen 10, 10', 12 abgedichtet ist.

Das obere Ende 14 der Hülse 11 ist so ausgebildet, daß sie nur mittels eines entsprechenden Steckschlüssels verdreht werden kann. Die Anschlagmutter 19 begrenzt den Voreinstellungshub der Hülse 11 und verhindert das versehentliche Herausdrehen des Ventileinsatzes.

Um den Einbau in einen Profilheizkörper zu ermöglichen, trägt das Ventilgehäuse 0 außen ein Schraubgewinde 20 oberhalb des Auslasses 3'. Außerdem ist oberhalb des Auslasses 3' eine erste O-Ring-Dichtung 21, unterhalb desselben eine zweite O-Ring-Dichtung 22 vorgesehen.

Der Auslaß 3' selbst wird gebildet durch eine etwa keilförmige Ausfräsung im Bereich der Erweiterung 5, in die das untere Ende 16 der Voreinstellungshülse 11 eintaucht.

Dabei ist das untere Ende 16 der Hülse 11 rein zylindrisch ausgebildet, da im Gegensatz zum Stand der Technik, wo das untere Ende der Voreinstellungshülse 11 mit dem Boden der Vertiefung 5 den für die Durchflußmenge verantwortlichen Spalt bildet, im vorliegenden Ausführungsbeispiel der untere Rand der Voreinstellungshülse 11 mit dem Fenster 3' zusammenwirkt.

Wie insbesondere Fig. 5 gut erkennen läßt, wird das Fenster 3' bevorzugt hergestellt durch eine Ausfräsung, die - in Seitenansicht gesehen - etwa viertelkreisförmig ist. Dadurch entsteht eine progressiv zunehmende Abhängigkeit zwischen Voreinstellungshub und Durchflußmenge.

Es versteht sich, daß durch andere Fensterformen praktisch jede beliebige Abhängigkeit zwischen Voreinstellungshub und Durchflußmenge realisiert werden kann.

Außerdem besteht hier die Möglichkeit, durch Herunterdrehen des unteren Endes 16 der Voreinstellungshülse 11 bis auf den Boden der Vertiefung 5 die Durchflußöffnung 4 ganz abzustellen, was bei bestimmten Montagearbeiten am Heizungssystem erwünscht ist.

## Patentansprüche

1. Thermostatventil mit Voreinstellung der Durchflussmenge, umfassend ein Ventilgehäuse (0) mit einem Spindelstutzen (1), einem Einlaufstutzen (2), einem heizkörperseitigen Auslauf (3) und einer Durchflussöffnung (4), eine durch eine Feder (8) in Öffnungsrichtung belastete Ventilspindel (5), an der eine die Durchflussöffnung (4) mehr oder weniger verschließende Profildichtung (7) angebracht ist, eine die Ventilspindel (6), die Feder (8) und die Profildichtung (7) konzentrisch umgebende, gegen die Ventilspindel (6) abgedichtete Voreinstellungshülse (11), deren inneres Ende (16) in eine die Durchlassöffnung (4) erweiternde Vertiefung (5) eintaucht, und eine den Voreinstellungshub begrenzende Anschlagmutter (19), dadurch gekennzeichnet, dass das Gehäuse (0) einteilig ist, dass die Hülse (11) einteilig ist, dass die Hülse (11) mittels eines direkt im Ventilgehäuse (0) ausgeführten Gewindes (13) höhenverstellbar ist, dass die Steigung des Gewindes (13) mit dem Voreinstellungshub korrespondiert, dass das äußere Ende (14) der Hülse (11) eine Marke (15) und das Gehäuse (0) eine damit korrespondierende Markierung (17) trägt, dass die axiale und radiale Wendellage des Gewindes (13) in Hülse (11) und Ventilgehäuse (0) wiederholgenau und konstant, bezogen auf die Hubendlagen der Hülse (11) und auf die Marke (17), eingestellt ist.

2. Thermostatventil nach Anspruch 1, dadurch gekennzeichnet, daß das innere Ende (16) der Hülse (11) eine innere Konusfläche (16.1) besitzt und an wenigstens einer Stelle (16.2) außen konisch abgeflacht ist, so daß die untere Ringfläche der Hülse (11) wenigstens einen Öffnungsspalt (16.3) aufweist.

3. Thermostatventil nach Anspruch 1 oder 2, dadurch gekennzeichnet, daß die Markierung (17) am Ventilstutzen (1) angebracht ist und daß bei ganz herausgedrehter Hülse (11) Markierung (17) und Marke (15) fluchten.

4. Thermostatventil nach Anspruch 1, 2 oder 3, dadurch gekennzeichnet, daß der Hub der Hülse (11) auf einen Wert kleiner als die Steigung des Gewindes (13) im Ventilgehäuse (0) begrenzt ist, vorzugsweise auf 7/8 der Steigung.

5. Thermostatventil nach einem der Ansprüche 1 bis 4, dadurch gekennzeichnet, dass in die Wand der Vertiefung (5) wenigstens ein etwa keilförmiges Fenster (3') eingearbeitet ist und dass das innere Ende (16) der Hülse (11) mit dem Fenster (3') die Abhängigkeit der Durchflussmenge vom Voreinstellungshub definiert.

6. Thermostatventil nach Anspruch 5, dadurch gekennzeichnet, daß das Fenster (3') gebildet ist durch eine viertelkreisförmige Ausfräsung, deren Achse senkrecht zur Achse der kreiszylindrischen Vertiefung (5) orientiert ist.

7. Thermostatventil nach einem der Ansprüche 1 bis 6, dadurch gekennzeichnet, daß das obere Ende (14) der Hülse (11) als Mehrkant, insbesondere als Sechskant ausgebildet ist.

8. Thermostatventil nach einem der Ansprüche 1 bis 7, dadurch gekennzeichnet, daß in die Hülse (11) von unten eine die Feder (8) haltende Stützhülse (18) eingeschraubt und eingedichtet ist.

## Claims

1. Thermostatic valve with presetting of the flow rate, comprising a valve casing (o) with a spindle connection (1), an inlet connection (2), an outlet (3) on the heater side and a flow opening (4), a valve spindle (6), which is loaded in the opening direction by a spring (8) and on which a profiled seal (7) is fitted, the latter more or less closing the flow opening (4), a presetting sleeve (11), which concentrically surrounds the valve spindle (6), the spring (8) and the profiled seal (7), is sealed off from the valve spindle (6) and the inner end (16) of which moves into a recess (5) widening the flow opening (4), and a stop nut (19), which limits the presetting travel, characterised in that the casing (0) is in one piece, that the sleeve (11) is in one piece, that the sleeve (11) is vertically adjustable by means of a thread (13) formed directly in the valve casing (0), that the pitch of the thread (13) corresponds to the presetting travel, that the outer end (14) of the sleeve (11) bears a mark (15) and the casing (0) a marking (17) corresponding thereto, that the axial and radial helix position of the thread (13) in the sleeve (11) and the valve casing (0) is set so as to be reproducible and constant, related to the end of stroke positions of the sleeve (11) and to the mark (17).

2. Thermostatic valve according to claim 1, characterised in that the inner end (16) of the sleeve (11) has an inner conical surface (16.1) and is conically flattened externally at least at one point, so that the lower annular surface of the sleeve (11) comprises at least one opening gap (16.3).

3. Thermostatic valve according to claim 1 or 2,
characterised in that the marking (17) is applied to the valve connection (1), and that the marking (17) and the mark (15) are aligned when the sleeve (11) is completely unscrewed.

4. Thermostatic valve according to claim 1, 2 or 3,
characterised in that the travel of the sleeve (11) is limited to a value which is smaller than the pitch of the thread (13) in the valve casing (0), preferably to 7/8 of the pitch.

5. Thermostatic valve according to any one of claims 1 to 4,
characterised in that at least one approximately wedge-shaped window (3') is worked into the wall of the recess (5), and that the inner end (16) of the sleeve (11) defines with the window (3') the dependency of the flow rate on the presetting travel.

6. Thermostatic valve according to claim 5, characterised in that the window (3') is formed by milling out a quadrantal shape, the axis of which is oriented perpendicularly to the axis of the circular cylindrical recess (5).

7. Thermostatic valve according to any one of claims 1 to 6,
characterised in that the upper end (14) of the sleeve (11) is formed as a polygon, in particular as a hexagon.

8. Thermostatic valve according to any one of claims 1 to 7,
characterised in that a support sleeve (18), which holds the spring (8), is screwed and sealed into the sleeve (11) from below.

## Revendications

1. Soupape thermostatique avec préréglage du débit, comprenant une cage de soupape (0) avec un raccord de tige (1), un raccord d'admission (2), une sortie (3) du côté du radiateur et un orifice de débit (4), une tige de soupape (6) qui est chargée par un ressort (8) dans le sens de l'ouverture et sur laquelle est appliquée un joint moulé (7) fermant plus ou moins l'orifice de débit (4), une bague de préréglage (11) qui entoure concentriquement la tige de soupape (6), le ressort (8) et le joint moulé (7), qui est étanche par rapport à la tige de soupape (6) et dont l'extrémité (16) intérieure s'enfonce dans une cavité (5) élargissant l'orifice de débit (4) ainsi qu'un écrou de blocage (19) délimitant la course de préréglage, caractérisée en ce que la cage (0) est d'un seul tenant, en ce que la bague (11) est d'un seul tenant, en ce que la bague (11) peut être réglée en hauteur au moyen d'un filet (13) réalisé directement dans la cage de soupape (0), en ce que le pas du filet (13) correspond à la course de préréglage, en ce que l'extrémité (14) extérieure de la bague (11) porte une marque (15) et le boîtier (0) un marquage (17) correspondant, en ce que la position axiale et radiale de l'hélice du filet (13) dans la bague (11) et la cage de soupape (0) est ajustée de manière fidèle et constante, en référence aux positions de la bague (11) et de la marque (17).

2. Soupape thermostatique selon la revendication 1, caractérisée en ce que l'extrémité (16) intérieure de la bague (11) présente une surface conique (16.1) intérieure et un méplat conique extérieur à au moins un endroit (16.2) de sorte que la surface annulaire inférieure de la bague (11) présente au moins une fente d'ouverture (16.3).

3. Soupape thermostatique selon la revendication 1 ou 2, caractérisée en ce que le marquage (17) est placé sur le raccord de soupape (1) et en ce que, quand la bague (11) est complètement sortie par rotation, le marquage (17) et la marque (15) sont alignés.

4. Soupape thermostatique selon l'une quelconque des revendications 1,2 ou 3 caractérisée en ce que la course de la bague (11) est limitée à une valeur inférieure au pas du filet (13) dans la cage de soupape (0), de préférence à 7/8 du pas.

5. Soupape thermostatique selon l'une quelconque des revendications 1 à 4, caractérisée en ce qu'au moins une fenêtre (3') sensiblement en forme de coin est pratiquée dans la paroi de la cavité (5), et en ce que l'extrémité (16) intérieure de la bague (11) définit avec la fenêtre (3') la dépendance du débit par rapport à la course de préréglage.

6. Soupape thermostatique selon la revendication 5, caractérisée en ce que la fenêtre (3') est formée par un fraisage en forme de quart de cercle dont l'axe est orienté perpendiculairement à l'axe de la cavité cylindrique (5).

7. Soupape thermostatique selon l'une quelconque des revendications 1 à 6, caractérisée en ce que l'extrémité supérieure (14) de la bague (11) a la forme d'un polygone, en particulier d'un hexagone.

8. Soupape thermostatique selon l'une quelconque des revendications 1 à 7, caractérisée en ce qu'une bague de support (18) soutenant le ressort (8) est vissée dans la bague (11) par dessous et rendue étanche.
